# EUROPEAN PATENT SPECIFICATION

(11) **EP 2 525 471 B1**
(45) Date of publication and mention of the grant of the patent: **29.04.2015**
(21) Application number: 10843231.1
(22) Date of filing: 14.01.2010
(51) Int. Cl.: H02J 13/00, H02J 3/14

(54) **AUXILIARY POWER SUPPLY DEVICE OF HOME APPLIANCES USING SMART GRID**
NOTSTROMVERSORGUNGSVORRICHTUNG FÜR HAUSHALTSGERÄTE MIT INTELLIGENTEM STROMNETZ
DISPOSITIF D'ALIMENTATION ÉLECTRIQUE AUXILIAIRE POUR APPAREILS MÉNAGERS UTILISANT UN RÉSEAU INTELLIGENT

(43) Date of publication of application: 21.11.2012
(73) Proprietor: LG Electronics Inc., Seoul 150-721 (KR)
(72) Inventor: KANG, Sung-Su, Gyoungsangnam-do 641-711 (KR)
(74) Representative: Vossius & Partner Patentanwälte Rechtsanwälte mbB
(86) International application number: PCT/KR2010/000230
(87) International publication number: WO 2011/087165

(56) References cited:
- WO-A1-02/17151
- WO-A1-03/084022
- WO-A1-2009/146287
- CA-A1- 2 469 768
- JP-A- 2008 308 030
- KR-A- 19980 059 783
- KR-A- 20000 010 188
- KR-A- 20090 119 754
- KR-B1- 100 613 577
- US-A1- 2006 276 938
- US-A1- 2009 048 716
- US-A1- 2009 127 932
- US-A1- 2009 292 402

## Description

### TECHNICAL FIELD

The present disclosure relates to an auxiliary power supply device of home appliances using a smart grid.

### BACKGROUND ART

Generally, electricity is supplied to home appliances in the order of a power plant operated by a public or private company, a power transmission line, and a power distribution line.

That is, power is supplied not by a distributed structure but by a centralized structure. In order words, power is supplied through a radial structure expanding from the center to the periphery. This is not a customer-centered structure but a supplier-centered one-way structure.

Therefore, residential customers can get only limited information about prices of electricity from a power exchange. Furthermore, since electricity prices are practically fixed, it is difficult for customers to buy electricity at desired prices.

Also, a price difference of electricity supplied according to demands occurs in a power supply structure of the supplier-centered one-way structure. However, it is difficult to enable the customers to effectively utilize the price difference due to the limited power supply structure.

Thus, much research is being performed on smart grids to solve the above-mentioned problems and use energy efficiently.

A smart grid is a next-generation power and management system developed by applying information technology (IT) to the existing power grid for improving energy efficiency by realizing two-way and real-time information exchange between power providers and consumers.

In addition to unilateral power supply from a power supply source to a network to which home appliances are connected, two-way communication is necessary between the power supply source and the network to realize a smart grid for residential customers. In addition, new devices are necessary for such two-way communication.

WO-A-03/084022 discloses an energy management system and method comprising an energy storage device wherein when energy is relatively less costly is adapted to control the mains power to provide energy to the batteries, and during peak periods to direct energy from the batteries to the other devices.

### DISCLOSURE OF THE INVENTION

### TECHNICAL PROBLEM

Embodiments provide an auxiliary power supply device of home appliances using a smart grid which is connected to the home appliances to supply operation power to the home appliances and charges electricity to be supplied into the home appliances when the electricity has a relatively inexpensive price.

Embodiments also provide an auxiliary power supply device of home appliances using a smart grid which is connected to the plurality of home appliances to inform a charge completion state to the home appliances through communication therebetween, thereby allowing a user to use the charged power first.

### TECHNICAL SOLUTION

The present invention is defined by the features of the appended claims.

### ADVANTAGEOUS EFFECTS

According to the embodiment, the auxiliary power supply device which supplies the charged power as power for operating the home appliances is provided.

Also, the auxiliary power supply device may allows the user to confirm an electricity charge less than the uppermost electricity charge in the power management network including the EMS, thereby performing the charging. Thus, the electricity having a relatively inexpensive price may be charged and then supplied into the home appliances.

Also, in the auxiliary power supply device charged as described above, when the charging is completed, whether the auxiliary power supply device is usable is informed into the communicable home appliances through the EMS. Thus, the auxiliary power supply device that is a relatively inexpensive power supply source may be used.

When the charging is insufficient during the use of the auxiliary power supply device, this may be informed to the user. Thus, the user may replace the power source to more economically use the home appliances.

### BRIEF DESCRIPTION OF THE DRAWINGS

Fig. 1 is a schematic view of a home power management network charged by being connected to an auxiliary power supply device according to an embodiment.
Fig. 2 is a view illustrating an example of the auxiliary power supply device according to an embodiment.
Fig. 3 is a view illustrating an internal constitution of the auxiliary power supply device according to an embodiment.
Fig. 4 is a view illustrating an example of a home appliance connected to the auxiliary power supply device according to an embodiment.
Fig. 5 is a block diagram illustrating a control constitution of the home appliance and the auxiliary power supply device of Fig. 4.
Fig. 6 is a view illustrating another example of a home appliance connected to the auxiliary power supply device according to an embodiment.
Fig. 7 is a block diagram illustrating a control constitution of the home appliance and the auxiliary power supply device of Fig. 6.
Fig. 8 is a view illustrating another example of a home appliance connected to the auxiliary power supply device according to an embodiment.
Fig. 9 is a block diagram illustrating a control constitution of the home appliance and the auxiliary power supply device of Fig. 8.
Fig. 10 is a flowchart illustrating a process of supplying power to the home appliance using the auxiliary power supply device according to an embodiment.

### MODE FOR CARRYING OUT THE INVENTION

Hereinafter, exemplary embodiments will be described with reference to the accompanying drawings. The invention may, however, be embodied in many different forms and should not be construed as being limited to the embodiments set forth herein; rather, that alternate embodiments included in other retrogressive inventions or falling within the spirit and scope of the present disclosure will fully convey the concept of the invention to those skilled in the art.

Looking with respect to a smart grid before description of drawings, the smart grid includes a plurality of power plants and a plurality of power generating facilities such as a solar cell station, a wind power plant, and a fuel cell station. Electricity generated by the power plants and power generating facilities are transmitted to a sub-control center.

The sub-control center stores the electricity and transmits the electricity to a substation where the electricity is adjusted in voltage for being distributed to consumers such as residential customers and manufacturing plants.

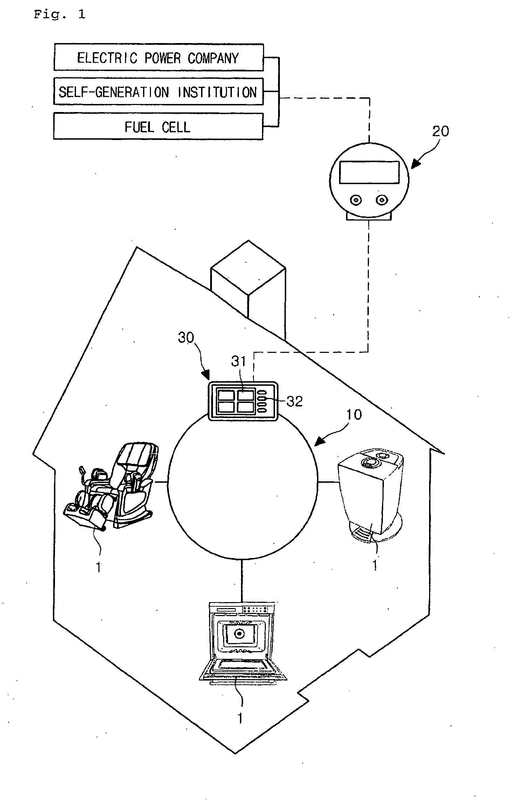

Fig. 1 illustrates an example of a power management network in a home that is one of consumers to which the electricity is distributed as described above.

As shown in drawings, a home power management network 10 charged by being connected to an auxiliary power supply device according to an embodiment includes an advanced metering infrastructure (AMI) 20 which is used to measure an amount of electricity and calculate electricity charges and an energy management system (EMS) connected to the AMI 20 for real-time power management and real-time power consumption prediction for consumers.

The AMI 20 of the smart grid is backbone technology for integrating consumers based on an open architecture. The AMI 20 provides consumers with the ability to use electricity efficiently and power providers with the ability to detect problems on their systems and operate them efficiently.

That is, in the smart grid, the AMI 20 provides a reference so that all electric devices can be connected to each other regardless of manufactures of the electric devices, and a real-time price signal of an electricity market is transmitted through the AMI 20 to the EMS 30 provided in a consumer.

In addition, the EMS 30 distributes electricity to a plurality of electric devices provided in the consumer and communicates with the electric devices for detecting power information of the electric devices and performing a power information processing process such as a power consumption or electricity charge limit setting process so as to reduce energy consumption and costs.

That is, the EMS 30 includes the AMI 20 for real-time measurements of power, electricity rates, power consumption peak times and the EMS 30 capable of communicating with both the AMI 20 and the home appliances 1 to transmit and receive control signals for distributing electricity to the home appliances 1 to construct a power supply network 10. Also, the home appliances 1 may be connected to the power supply network 10 constructed as described above to receive operation power.

The EMS 30 includes a display unit 31 for displaying current electricity consumption states and external environments (such as temperature and humidity), an input unit 32 that can be manipulated by a user, a communication unit (now shown) for communication with the home appliances 1 through radio waves or wires such as PLC, and the control unit (not shown) for processing control signals.

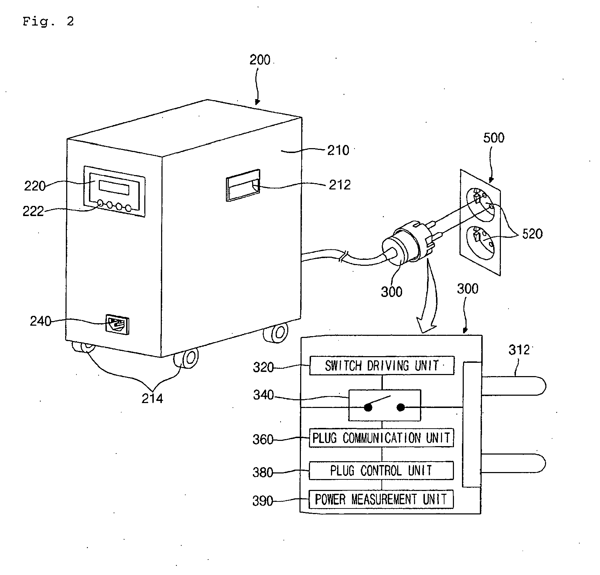

In the home appliances 1 connected to communicate with the EMS 30, identification codes of the home appliances 1 are registered in the EMS 30. Thus, transmission information provided from an auxiliary energy management device (see Fig. 2) 200 that will be described later may be transmitted to the home appliances using the registered identification codes.

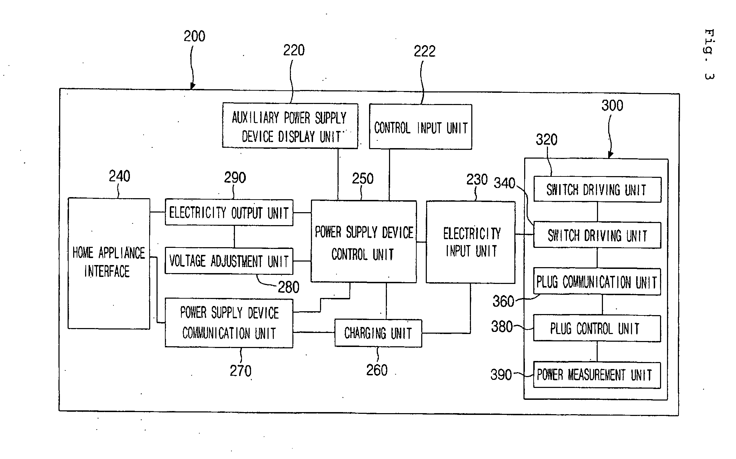

Fig. 2 is a view illustrating an example of the auxiliary power supply device according to an embodiment. Fig. 3 is a view illustrating an internal constitution of the auxiliary power supply device according to an embodiment.

Referring to Figs. 2 and 3, an auxiliary power supply device 200 according to an embodiment is coupled to an outlet 50 connected to the power management network 10 including the AMI 20 and the EMS 30 to receive power for charging.

For this, the auxiliary power supply device 200 includes a connecting plug 300 communicating with the EMS 30.

In detail, a coupling part 312 which is fitted into a socket 52 provided in the outlet 50 is disposed in the connecting plug 300.

The connecting plug 300 includes a plug communication unit 360 bidirectionally communicating with the EMS 30, a switch 340 for selective charging according to supplied electricity price information received form the EMS 30, and a switch driving unit 320 for operating the switch 340.

The switch driving unit 320 further includes a plug control unit 380 for setting the uppermost price of a charge of suppliable electricity to limit a supplied electricity change having a chargeable price region for the EMS 30 and comparing the set price to a plurality of supply prices to operate the switch driving unit 320 and a power measurement unit 390 for measuring an amount of charged electricity.

The electricity supplied from the connecting plug 300 is transmitted into an electricity input unit 230 provided in the auxiliary power supply device 200 and stored in a charging unit 260.

A home appliance interface 240 compatibly connected to the plurality of home appliances 1 is provided in the auxiliary power supply device 200.

The home appliance interface 240 is configured to supply the electricity stored in the charging unit 260 to the home appliances 1 as an operation power source through an electricity output unit 290 when one home appliance 1 is connected. Also, a voltage adjustment unit 280 may be disposed within the auxiliary power supply device 200 to stably supply the operation power source.

The auxiliary power supply device 200 includes a power supply device communication unit 270 for transmitting/receiving a control signal into/from the home appliances 1 and a power supply device control unit 250 for controlling the charging and the supply of the charged power and processing the control signal.

In addition, the auxiliary power supply device 200 includes a control input unit 222 for setting the uppermost price of chargeable electricity and an auxiliary power supply device display unit 220 for displaying a supply price of charging electricity, a charged degree, and price information set through the control input unit 222. Also, a moving wheel 214 may be disposed on the auxiliary power supply device 200 to easily move a position of the auxiliary power supply device 200.

Hereinafter, examples of the home appliances 1 connected to the auxiliary power supply device 200 will be described in detail.

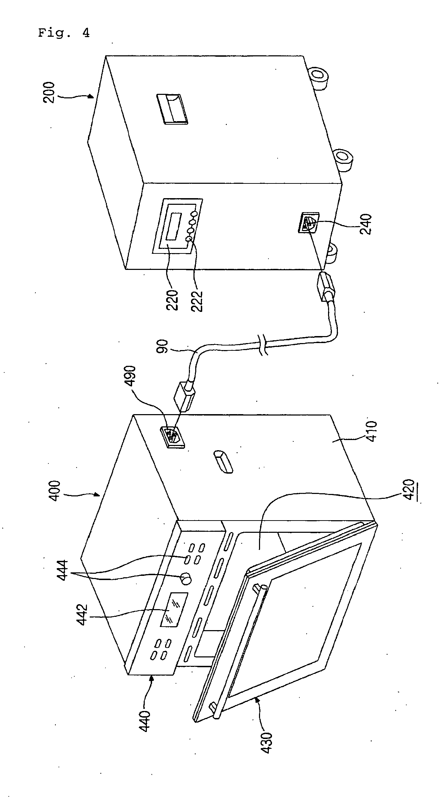

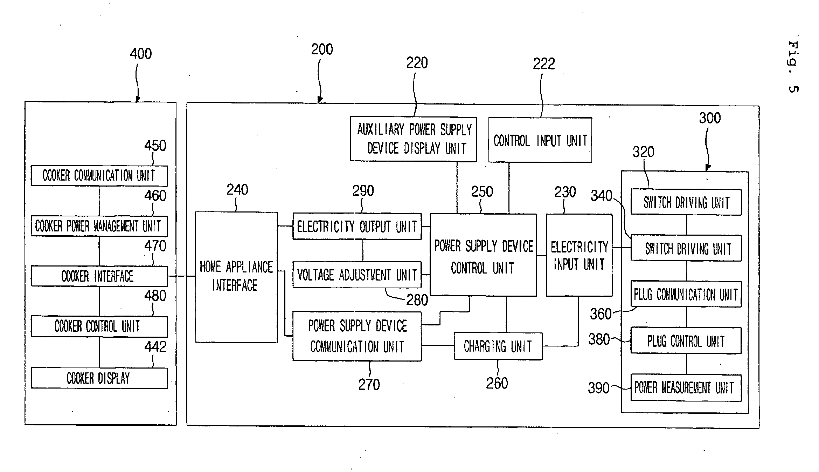

Fig. 4 is a view illustrating an example of a home appliance connected to the auxiliary power supply device according to an embodiment. Fig. 5 is a block diagram illustrating a control constitution of the home appliance and the auxiliary power supply device of Fig. 4.

Referring to Figs. 4 and 5, a cooker 400 for cooking foods is provided.

The cooker 400 includes a cooker body 410 having an approximately rectangular shape with a hollow therein to receive foods and a cooking chamber 420 for cooking the received foods by selectively using a plurality of heating sources.

The cooking chamber 420 is selectively covered by a door 430 rotatably coupled to the cooker body 410 to take the foods in/out.

A control panel 440 for selectively controlling the plurality of heating sources disposed within the cooking chamber 420 is disposed on a front upper portion of the cooker body 410.

For this, the control panel 440 includes a manipulation unit 444 for selecting a heating source to be operated by a user's push manipulation or rotation manipulation and controlling a cooking time of the selected heating source and a cooker display 442 for displaying a control command inputted by the manipulation unit 444, a control state according to the control command, and operation information of the cooking chamber 420.

Also, the cooker display 442 may display information according to a control signal transmitted through the auxiliary power supply device 200 or the EMS 30. For this, a cooker communication unit 450 and a cooker control unit 480 may be further disposed on a side of the control panel 440.

A cooker auxiliary power connection unit 490 for using the charging power stored in the auxiliary power supply device 200 is disposed on a side of the cooker body 410. The cooker auxiliary power connection unit 490 and the auxiliary power supply device 200 may be connected to each other through a connection cable 90.

In detail, a home appliance interface 240 connected to the cooker 400 through the connection cable 90 is disposed in the cooker auxiliary power connection unit 490, and a cooker interface 470 connected to the auxiliary power supply device 200 through the cooker auxiliary power connection unit 490 is disposed in the cooker 400 to supply the charged electricity and transmit the control signal.

When the auxiliary power supply device 200 and the cooker 400 are connected to each other through the connection cable 90, electricity stored in the charging unit 260 of the auxiliary power supply device 200 is supplied into the cooker 400 through the electricity output unit 290. Also, a cooker power management unit 460 for operating the cooker 400 using the supplied electricity is disposed in the cooker 400.

That is, when the auxiliary power supply device 200 is connected, the electricity provided from the auxiliary power supply device 200 may be used by the cooker power management unit 460. Although not shown, when a power plug of the cooker 400 is directly connected to the outlet 50, the cooker power management unit 460 controls the electricity provided through the power supply network 10 to use the electricity as an operation power source for cooker 400.

During the supply of the charged power into the cooker 400, the auxiliary power supply device display unit 220 of the auxiliary power supply device 200 may display consumption of the charged electricity and a charge of the electricity.

The auxiliary power supply device 200 supplying the charged power into the cooker 400 may be connected to other home appliances 1 except for the cooker 400.

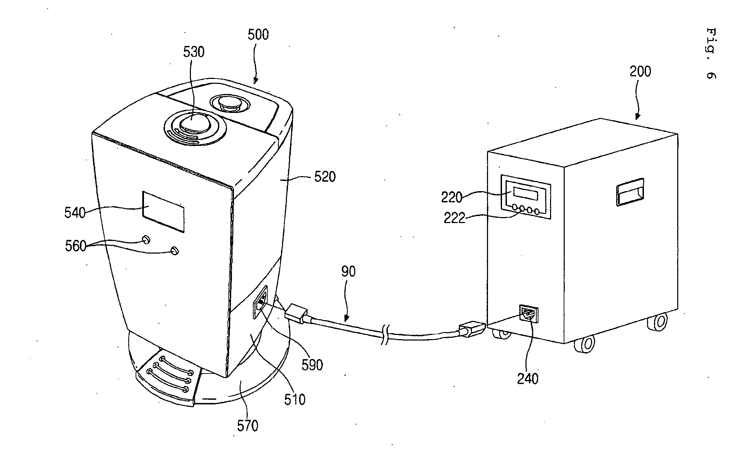

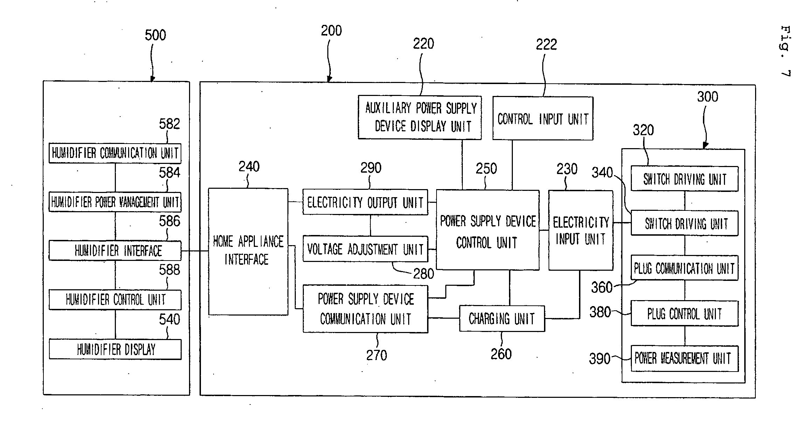

Fig. 6 is a view illustrating another example of the home appliance connected to the auxiliary power supply device according to an embodiment. Fig. 7 is a block diagram illustrating a control constitution of the home appliance and the auxiliary power supply device of Fig. 6.

Referring to Figs. 6 and 7, a humidifier 500 for adjusting humidity to provide a clean indoor environment to an indoor space is provided.

The humidifier 500 includes a humidifier body 510 and a water tank 520 mounted on the humidifier body 510.

In detail, the humidifier body 510 provides a space for mounting the water tank 520 on a rear portion thereof. When the water tank 520 is mounted, the humidifier 510 processes water received in the water tank 520 to generate wet vapor.

For this, an ultrasonic generator or a heating element is equipped in the humidifier body 510, and a blower unit for discharging the generated wet vapor may be further included in the humidifier body 510.

A path of the wet vapor generated from the humidifier body 510 is disposed in the water tank 530, and a spray nozzle 530 is selectively mounted on the path to discharge the wet vapor in a direction that a user wants.

Additionally, the humidifier body 510 includes a manipulation unit 560 through which a user controls an injection amount and time and a humidifier display 540 for displaying an input state of a control command by the manipulation unit 560 and operation information of the humidifier 500 on a front thereof.

Also, the humidifier display 540 may display information according to a control signal transmitted through the auxiliary power supply device 200 or the EMS 30. For this, a humidifier communication unit 582 and a humidifier control unit 588 may be further disposed within the humidifier body 510.

A humidifier auxiliary power connection unit 590 for using the charging power stored in the auxiliary power supply device 200 is disposed on a side of the humidifier body 510. The humidifier auxiliary power connection unit 590 and the auxiliary power supply device 200 may be connected to each other through a connection cable 90, like the cooker 400.

In detail, a home appliance interface 240 connected to the humidifier 500 through the connection cable 90 is disposed in the humidifier auxiliary power connection unit 590, and a humidifier interface 586 connected to the auxiliary power supply device 200 through the humidifier auxiliary power connection unit 590 is disposed in the humidifier 500 to supply the charged electricity and transmit the control signal.

When the auxiliary power supply device 200 and the humidifier 500 are connected to each other through the connection cable 90, electricity stored in the charging unit 260 of the auxiliary power supply device 200 is supplied into the humidifier 500 through the electricity output unit 290. Also, a humidifier power management unit 584 for operating the humidifier 500 using the supplied electricity is disposed in the humidifier 500.

That is, when the auxiliary power supply device 200 is connected, the electricity provided from the auxiliary power supply device 200 may be used by the humidifier power management unit 584. Although not shown, when a power plug of the humidifier 500 is directly connected to the outlet 50, the humidifier power management unit 584 controls the electricity provided through the power supply network 10 to use the electricity as an operation power source for humidifier 500.

During the supply of the charged power into the humidifier 500, the auxiliary power supply device display unit 220 of the auxiliary power supply device 200 may display consumption of the charged electricity and a charge of the electricity.

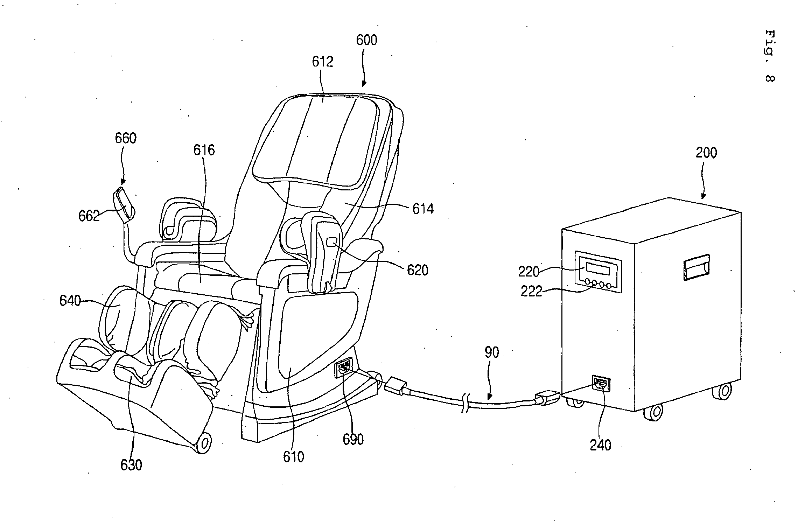

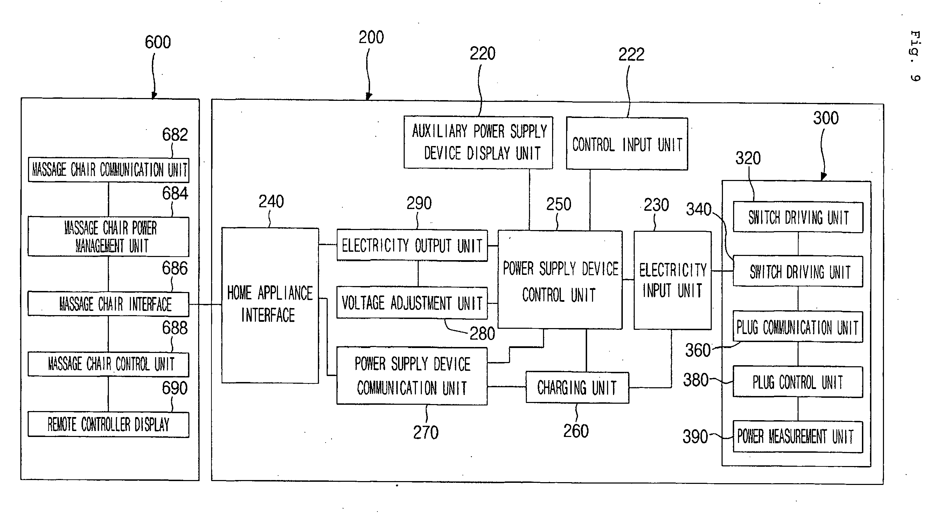

Fig. 8 is a view illustrating another example of the home appliance connected to the auxiliary power supply device according to an embodiment. Fig. 9 is a block diagram illustrating a control constitution of the home appliance and the auxiliary power supply device of Fig. 8.

Referring to Figs. 8 and 9, a massage chair 600 for massaging a user's body is provided.

The massage chair 600 includes a massage chair body 610 having a chair shape to massage the user's body, a plurality of motors, and an air adjustment device connected to a plurality of air bags to selectively massage at least one portion of the user's body.

In detail, the massage chair body 610 includes a back pad 614 for massaging a user's back, a headrest pad 612 for massaging the user's neck, a hip pad 616 for massaging the user's hip, an arm massage part 440, a leg massage part 640, and a foot massage part 630, which are operated independently. For this, the motors or air adjustment device that are controlled independently are provided to separately massage each portion of the user's body.

That is, each of the back pad 614, the headrest pad 612, and the hip pad 616 includes a plurality of massage protrusions connected to the motors to massage corresponding portions of the user seated thereon while moving in various patterns.

The arm massage part 640 and the leg massage part 760 use the air adjustment devices to expand and contract the air bags, thereby massaging the user's hands and legs.

The massage chair 600 includes a remote controller 660 for separately or concurrently operating the massage parts configured above according to a user's need and a control unit 660 for transmitting a control command to each massage part according to contents selected by the remote controller 660.

The remote controller 660 is disposed on a side of the arm massage part 640 so that the user seated on the massage chair 600 may conveniently check and operate the remote controller 660. The remote controller 660 includes a touch type display 662 so that the user may easily check and select an operation mode.

Thus, the user may input a control signal and confirm a controlled state through the touch type display 662 in a state where the user is seated on the massage chair body 610.

Also, the touch type display 662 may display information according to a control signal transmitted through the auxiliary power supply device 200 or the EMS 30. For this, a massage chair communication unit 682 and a massage chair control unit 688 may be further disposed on a side of the remote controller 660.

A massage chair auxiliary power connection unit 690 for using the charging power stored in the auxiliary power supply device 200 is disposed on a side of the massage chair body 610. The massage chair auxiliary power connection unit 690 and the auxiliary power supply device 200 may be connected to each other through a connection cable 90, like the humidifier 500.

In detail, a home appliance interface 240 connected to the massage chair 600 through the connection cable 90 is disposed in the massage chair auxiliary power connection unit 690, and a massage chair interface 686 connected to the auxiliary power supply device 200 through the massage chair auxiliary power connection unit 690 is disposed in the massage chair 600 to supply the charged electricity and transmit the control signal.

When the auxiliary power supply device 200 and the massage chair 600 are connected to each other through the connection cable 90, electricity stored in the charging unit 260 of the auxiliary power supply device 200 is supplied into the massage chair 600 through the electricity output unit 290. Also, a massage chair power management unit 684 for operating the massage chair 600 using the supplied electricity is disposed in the massage chair 600.

That is, when the auxiliary power supply device 200 is connected, the electricity provided from the auxiliary power supply device 200 may be used by the massage chair power management unit 684. Although not shown, when a power plug of the massage chair 600 is directly connected to the outlet 50, the massage chair power management unit 684 controls the electricity provided through the power supply network 10 to use the electricity as an operation power source for massage chair 600.

During the supply of the charged power into the massage chair 600, the auxiliary power supply device display unit 220 of the auxiliary power supply device 200 may display consumption of the charged electricity and a charge of the electricity.

Hereinafter, an effect of the auxiliary power supply device 200 connected the various home appliances 1 to supply charging power to the home appliances 1 will be described.

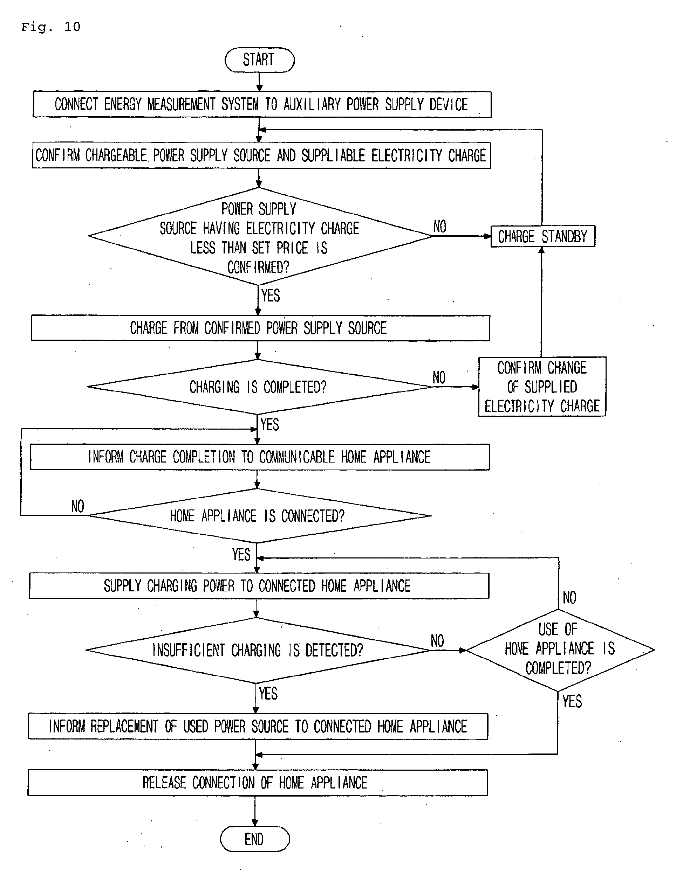

Fig. 10 is a flowchart illustrating a process of supplying power to the home appliance using the auxiliary power supply device according to an embodiment.

The auxiliary power supply device 200 according to an embodiment is connected to the power supply network 10 configured to receive electricity from the plurality of power sources, thereby distributing the electricity into the home appliances.

For this, the connecting plug 300 of the auxiliary power supply device 200 is fitted into the socket 52. When the connecting plug 300 is mounted, the EMS 30 and the auxiliary power supply device 200 communicate with each other through the plug communication unit 360.

That is, the auxiliary power supply device 200 may confirm a chargeable power supply source and a suppliable electricity charge through the EMS 30.

In the selection of the chargeable power source and the suppliable electricity charge, a power supply source having an electricity charge less than the uppermost suppliable electricity charge set by the power supply device control unit 250 is selected through the control input unit 222. When the selection is completed, the plug control unit 380 operates the switch driving unit 320 to turn the switch 320 on, thereby performing the charging.

Here, the uppermost suppliable electricity charge may be an electricity charge supplied from an electric power company in a late night time.

When the chargeable power supply source is confirmed through the above-described processes, the auxiliary power supply device 200 is charged from the power supply source.

During the changing, a change of the supplied electricity charge is periodically confirmed through the MES 30. When the supplied electricity charge is changed, the EMS 30 may confirm a relatively inexpensive electricity charge than the electricity charge confirmed after charging standby to charge the auxiliary power supply device 200 using the electricity having the relatively inexpensive electricity charge.

When the charging is completed, the auxiliary power supply device 200 informs charge completion information into the EMS 30 through the plug communication unit 360.

The EMS 30 receiving the charge completion information informs whether the charging of the auxiliary power supply device 200 is completed into only the home appliances 1 connected to the power management network 10.

Thus, the home appliances 1 connected to the power management network 10 to operate may confirm the transmitted information and thus confirm that the auxiliary power supply device 200 is usable. Thus, the user may release the connection of the power plug connected to the power management network 10 and connect the auxiliary power supply device 200 so as to use the electricity having the relatively inexpensive electricity charge.

When the auxiliary power supply device 200 is connected to the home appliances 1, the charging power stored in the charging unit 260 is supplied into the home appliances 1 to operate the home appliances 1. Here, the connection of the auxiliary power supply device 200 is maintained just when the use of the home appliances 1 is completed.

If the charging power is insufficient during the supply of the charged power into the home appliances 1, the auxiliary power supply device 200 transmits a message for informing replacement of the using power source into the home appliances 1 through the power supply device communication unit 270.

Accordingly, the user connects the power plug to the power management network 10 before the connection of the auxiliary power supply device 200 is released. Thus, the connection of the auxiliary power supply device 200 is released in a state where the power supply is maintained.

Also, the auxiliary power supply device 200 of which the connection is released may be connected to the power management network 10 again and charged. When the charging is completed, the above-described processes may be repeated to provide relatively inexpensive electricity into the home appliances 1.

### INDUSTRIAL APPLICABILITY

In general, electricity supplied into homes may be provided at a low price during the late night time at which the number of consumers is relatively less. Also, in the smart grid, electricity may be produced using solar energy, wind power, fuel cells, and the like, except for the power supplied from the electric power company. The produced electricity may be relatively inexpensive than that of the electricity provided from the electric power company. Thus, the user may use the relatively inexpensive electricity.

The auxiliary power supply device may be connected to the home power management network including the EMS, and thus charged at a relatively inexpensive price. When the charging is completed, the charge completion state may be informed to the communicable home appliances through the power management network.

Also, the user which confirmed the charge completion information of the auxiliary power supply device transmitted into the home appliances may connect the auxiliary power supply device to the home appliances to utilize the electricity at a relatively inexpensive price.

Also, when the auxiliary power supply device is used, power losses may be reduced to develop related industries and reduce environmental pollution occurring when electricity is produced.

## Claims

1. An auxiliary power supply device (200) for electric appliance (400) which supplies electricity into electric appliances connected to a power management network (10) to receive a power from a power supply source, the power management network comprising an advanced metering infrastructure (20, AMI) for measuring the power supplied from the power supply source and an energy management system (30, EMS) communicably connected to the electric appliances to control operations of the electric appliances on the basis of the power price information,
the auxiliary power supply device is selectively charged by the power supply source on the basis of power price information and coupled to the electric appliances to supply the charged power into the electric appliances, and **characterized in that**
the auxiliary power supply device is movable, and separately coupled to the electric appliances through a connection cable (90),
the auxiliary power supply device is communicably connected to the EMS and compatibly connected to the plurality of electric appliances, and
the auxiliary power supply device further comprises:
a charging unit (260) for storing the power supplied from the power supply source on the basis of the power price information;
a connecting plug (300) separably connected to the power supply source and including a switch (340) for selectively breaking the power supplied into the charging unit according to the power price information; and
a charging connection unit (240) separably connected to the connection cable(90) for supplying the power charged in the charging unit into one electric appliance of the plurality of electric appliances.

2. The auxiliary power supply device according to claim 1, wherein the auxiliary power supply device comprises an auxiliary display unit for displaying price information or charged state of the power supplied from the power supply source.

3. The auxiliary power supply device according to claim 1, further comprising a control unit receiving power price information transmitted from the EMS to allow a power to be received from the power supply source when the received price information is less than the uppermost set price information.

4. The auxiliary power supply device according to claim 1, wherein the electric appliances are directly connected to the power supply source to receive the power or receive the charged power through the auxiliary power supply device.

5. The auxiliary power supply device according to claim 1, wherein, when the suppliable charged power of the auxiliary power supply device is less than a power required for the electric appliances, a power source replacement message is displayed on the auxiliary power supply device or the electric appliances.

6. The auxiliary power supply device according to claim 1, wherein, when the charging is completed in the charging unit, a charge completion message is displayed on the auxiliary power supply device or the electric appliances.

7. A method for controlling an auxiliary power supply device (200) for charging electric appliances (400) which is connected to a power management network (10) to
receive a power from a power supply source on the basis of power price information, the method comprising:
recognizing an electricity charge of the chargeable power supply source;
charging the auxiliary power supply device through a connecting plug (300) from the power supply source when the electricity charge is less than a preset electricity charge;
releasing the connection between the auxiliary power supply device and the power supply source when the auxiliary power supply device is fully charged; and
transmitting the charged power of the auxiliary power supply device into the electric appliances through a connection cable (90), and
**characterized by**
moving the auxiliary power supply device to be separably connected to the electric appliances by the connection cable,
separately connecting the connecting plug to the power supply source and operating a switch (340) to receive the power from the power supply source; and
providing a charging connection unit (240) separably coupled to the connection cable and supplying the electricity stored in the auxiliary power supply device.

8. The method according to claim 7, further comprising displaying a power shortage message on the electric appliances or the auxiliary power supply device when the charged power of the auxiliary power supply device is insufficient during the use of the electric appliances.

9. The method according to claim 7, further comprising recognizing whether the electricity charge is changed during the charging of the auxiliary power supply device.

10. The method according to claim 7, wherein, when the electricity charge is higher than the preset electricity charge, the auxiliary power supply device is in a charging standby state.

## Patentansprüche

1. Hilfsstromversorgungsvorrichtung (200) für Elektrogerät (400), die Elektrogeräten, die mit einem Stromverwaltungsnetz (10) verbunden sind, um Strom von einer Stromversorgungsquelle zu beziehen, Elektrizität zuführt, wobei das Stromverwaltungsnetz eine Advanced Metering Infrastructure (Infrastruktur für intelligente Zählersysteme) (20, AMI) zum Messen des von der Stromversorgungsquelle zugeführten Stroms und ein Energiemanagementsystem (30, EMS) aufweist, das mit dem Elektrogerät kommunikationsfähig verbunden ist, um Betriebsabläufe des Elektrogeräts auf der Grundlage der Strompreisinformationen zu steuern,
wobei die Hilfsstromversorgungsvorrichtung durch die Stromversorgungsquelle auf der Grundlage von Strompreisinformationen selektiv geladen wird und mit den Elektrogeräten gekoppelt ist, um den Elektrogeräten den geladenen Strom zuzuführen, und **dadurch gekennzeichnet, dass**
die Hilfsstromversorgungsvorrichtung beweglich und mit den Elektrogeräten über ein Verbindungskabel (90) separat gekoppelt ist,
die Hilfsstromversorgungsvorrichtung mit dem EMS kommunikationsfähig verbunden und mit den mehreren Elektrogeräten kompatibel verbunden ist und
die Hilfsstromversorgungsvorrichtung ferner aufweist:
eine Ladeeinheit (260) zum Speichern des von der Stromversorgungsquelle zugeführten Stroms auf der Grundlage der Strompreisinformationen;
einen Verbindungsstecker (300), der mit der Stromversorgungsquelle trennbar verbunden ist und einen Schalter (340) zum selektiven Unterbrechen des der Ladeeinheit zugeführten Stroms gemäß den Strompreisinformationen aufweist; und
eine Ladeverbindungseinheit (240), die mit dem Verbindungskabel (90) trennbar verbunden ist, zum Zuführten des in der Ladeeinheit geladenen Stroms zu einem Elektrogerät der mehreren Elektrogeräte.

2. Hilfsstromversorgungsvorrichtung nach Anspruch 1, wobei die Hilfsstromversorgungsvorrichtung eine Hilfsanzeigeeinheit zum Anzeigen von Preisinformationen oder des Ladezustands des von der Stromversorgungsquelle zugeführten Stroms aufweist.

3. Hilfsstromversorgungsvorrichtung nach Anspruch 1, die ferner eine Steuereinheit aufweist, die vom EMS übertragene Strompreisinformationen empfängt, um zu ermöglichen, dass Strom von der Stromversorgungsquelle bezogen wird, wenn die empfangenen Preisinformationen kleiner als die obersten eingestellten Preisinformationen sind.

4. Hilfsstromversorgungsvorrichtung nach Anspruch 1, wobei die Elektrogeräte direkt mit der Stromversorgungsquelle so verbunden sind, dass sie den Strom beziehen oder den geladenen Strom über die Hilfsstromversorgungsvorrichtung beziehen.

5. Hilfsstromversorgungsvorrichtung nach Anspruch 1, wobei wenn der zuführbare geladene Strom der Hilfsstromversorgungsvorrichtung kleiner als ein für die Elektrogeräte erforderlicher Strom ist, eine Stromquellen-Austauschmeldung an der Hilfsstromversorgungsvorrichtung oder den Elektrogeräten angezeigt wird.

6. Hilfsstromversorgungsvorrichtung nach Anspruch 1, wobei wenn das Laden in der Ladeeinheit abgeschlossen ist, eine Ladeabschlussmeldung an der Hilfsstromversorgungsvorrichtung oder den Elektrogeräten angezeigt wird.

7. Verfahren zur Steuerung einer Hilfsstromversorgungsvorrichtung (200) zum Laden von Elektrogeräten (400), die mit einem Stromverwaltungsnetz (10) verbunden ist, um Strom von einer Stromversorgungsquelle auf der Grundlage von Strompreisinformationen zu beziehen, wobei das Verfahren aufweist:
Erkennen einer Elektrizitätsladung der ladefähigen Stromversorgungsquelle;
Laden der Hilfsstromversorgungsvorrichtung über einen Verbindungsstecker (300) von der Stromversorgungsquelle, wenn die Elektrizitätsladung kleiner als eine voreingestellte Elektrizitätsladung ist;
Lösen der Verbindung zwischen der Hilfsstromversorgungsvorrichtung und der Stromversorgungsquelle, wenn die Hilfsstromversorgungsvorrichtung voll geladen ist; und
Übertragen des geladenen Stroms der Hilfsstromversorgungsvorrichtung zu den Elektrogeräten über ein Verbindungskabel (90) und **gekennzeichnet durch** Bewegen der Hilfsstromversorgungsvorrichtung, um mit den Elektrogeräten **durch** das Verbindungskabel trennbar verbunden zu sein,
separates Verbinden des Verbindungssteckers mit der Stromversorgungsquelle und
Betätigen eines Schalters (340), um den Strom von der Stromversorgungsquelle zu beziehen; und
Bereitstellen einer Ladeverbindungseinheit (240), die mit dem Verbindungskabel trennbar gekoppelt ist und die in der Hilfsstromversorgungsvorrichtung gespeicherte Elektrizität zuführt.

8. Verfahren nach Anspruch 7, das ferner aufweist: Anzeigen einer Strommangelmeldung an den Elektrogeräten oder der Hilfsstromversorgungsvorrichtung, wenn der geladene Strom der Hilfsstromversorgungsvorrichtung im Gebrauch der Elektrogeräte unzureichend ist.

9. Verfahren nach Anspruch 7, das ferner aufweist: Erkennen, ob die Elektrizitätsladung beim Laden der Hilfsstromversorgungsvorrichtung geändert wird.

10. Verfahren nach Anspruch 7, wobei wenn die Elektrizitätsladung höher als die voreingestellte Elektrizitätsladung ist, sich die Hilfsstromversorgungsvorrichtung in einem Ladebereitschaftszustand befindet.

## Revendications

1. Dispositif d'alimentation électrique auxiliaire (200) pour un appareil électrique (400) qui fournit de l'électricité à des appareils électriques connectés à un réseau de gestion d'énergie (10) afin de recevoir une énergie d'une source d'alimentation électrique, le réseau de gestion d'énergie comprenant une infrastructure de mesure avancée (20, AMI) pour la mesure de l'énergie fournie depuis la source d'alimentation électrique et un système de gestion d'énergie (30, EMS) connecté de manière communicative aux appareils électriques pour commander le fonctionnement des appareils électriques sur la base de l'information du prix de l'énergie,
le dispositif d'alimentation électrique auxiliaire est chargé de manière sélective par la source d'alimentation électrique sur la base de l'information du prix de l'énergie et couplé aux appareils électriques afin de fournir l'énergie chargée aux appareils électriques, et **caractérisé en ce que**
le dispositif d'alimentation électrique auxiliaire est mobile et couplé séparément aux appareils électriques par un câble de connexion (90),
le dispositif d'alimentation électrique auxiliaire est connecté de manière communicable au système EMS et connecté de manière compatible à la pluralité d'appareils électriques, et
le dispositif d'alimentation électrique auxiliaire comprend en outre :
une unité de charge (260) servant à accumuler l'énergie fournie depuis la source d'alimentation électrique sur la base de l'information du prix de l'énergie ;
une fiche de connexion (300) connectée de manière séparable à la source d'alimentation électrique et comportant un interrupteur (340) pour interrompre de manière sélective l'énergie fournie à l'unité de charge selon l'information du prix de l'énergie ; et
une unité de connexion de charge (240) connectée de manière séparable au câble de connexion (90) afin de fournir l'énergie chargée dans l'unité de charge à un appareil électrique de la pluralité d'appareils électriques.

2. Dispositif d'alimentation électrique auxiliaire selon la revendication 1, dans lequel le dispositif d'alimentation électrique auxiliaire comprend une unité d'affichage
auxiliaire servant à afficher des informations de prix ou un état de charge de l'énergie fournie depuis la source d'alimentation électrique.

3. Dispositif d'alimentation électrique auxiliaire selon la revendication 1, comprenant en outre une unité de commande recevant l'information du prix de l'énergie transmise par le système EMS pour permettre de recevoir une énergie depuis la source d'alimentation électrique lorsque l'information du prix reçue est inférieure à l'information du prix définie la plus élevée.

4. Dispositif d'alimentation électrique auxiliaire selon la revendication 1, dans lequel les appareils électriques sont directement connectés à la source d'alimentation électrique afin de recevoir l'énergie ou afin de recevoir l'énergie chargée par le biais du dispositif d'alimentation électrique auxiliaire.

5. Dispositif d'alimentation électrique auxiliaire selon la revendication 1, dans lequel, lorsque l'énergie chargée disponible du dispositif d'alimentation électrique auxiliaire est inférieure à une énergie requise pour les appareils électriques, un message de remplacement de source d'énergie est affiché sur le dispositif d'alimentation électrique auxiliaire ou sur les appareils électriques.

6. Dispositif d'alimentation électrique auxiliaire selon la revendication 1, dans lequel, lorsque la charge est terminée dans l'unité de charge, un message de fin de charge est affiché sur le dispositif d'alimentation électrique auxiliaire ou sur les appareils électriques.

7. Procédé de commande d'un dispositif d'alimentation électrique auxiliaire (200) pour la charge d'appareils électriques (400) qui est connecté à un réseau de gestion d'énergie (10) pour recevoir une énergie depuis une source d'alimentation électrique sur la base d'une information du prix d'énergie, le procédé comprenant :
la reconnaissance d'une charge d'électricité de la source d'alimentation électrique pouvant être chargée ;
la charge du dispositif d'alimentation électrique auxiliaire par le biais d'une fiche de connexion (300) depuis la source d'alimentation électrique lorsque la charge d'électricité est inférieure à une charge d'électricité prédéfinie ;
la coupure de la connexion entre le dispositif d'alimentation électrique auxiliaire et la source d'alimentation électrique lorsque le dispositif d'alimentation électrique auxiliaire est entièrement chargé ; et
la transmission de l'énergie chargée du dispositif d'alimentation électrique auxiliaire aux appareils électriques par le biais d'un câble de connexion (90), et
**caractérisé par**
le déplacement du dispositif d'alimentation électrique auxiliaire à connecter de manière séparable aux appareils électriques par le câble de connexion,
la connexion séparée de la fiche de connexion à la source d'alimentation électrique et
l'actionnement d'un interrupteur (340) afin de recevoir l'énergie depuis la source d'alimentation électrique ; et
la mise à disposition d'une unité de connexion de charge (240) couplée de manière séparable au câble de connexion et la fourniture de l'électricité accumulée dans le dispositif d'alimentation électrique auxiliaire.

8. Procédé selon la revendication 7, comprenant en outre l'affichage d'un message de manque d'énergie sur les appareils électriques ou sur le dispositif d'alimentation électrique auxiliaire lorsque l'énergie chargée du dispositif d'alimentation électrique auxiliaire est insuffisante durant l'utilisation des appareils électriques.

9. Procédé selon la revendication 7, comprenant en outre la reconnaissance si la charge d'électricité est changée durant la charge du dispositif d'alimentation électrique auxiliaire.

10. Procédé selon la revendication 7, dans lequel, lorsque la charge d'électricité est supérieure à la charge d'électricité prédéfinie, le dispositif d'alimentation électrique auxiliaire est dans un état de veille de charge.
